# EUROPEAN PATENT APPLICATION

(11) **EP 1 060 701 A1**
(43) Date of publication of application: **20.12.2000**
(21) Application number: 00830428.9
(22) Date of filing: 16.06.2000
(51) Int. Cl.: A47J 31/54

(54) **A device for the rapid preparation of drinks in microwave oven by means of the intimate interaction between a heated fluid and a divided or porous substance**

(30) Priority: 18.06.1999 IT RA990005
(71) Applicant: Converti, Maurizio, 48011 Alfonsine (IT)
(72) Inventor: Converti, Maurizio, 48011 Alfonsine (IT)
(74) Representative: Lanzoni, Luciano

(57) **Abstract**

A device (1) for the rapid preparation of drinks in microwave oven by means of the intimate interaction between a heated fluid and a divided or porous substance comprises a first container (2), made of a material compatible with microwaves and transparent thereto, comprising a first compartment (3) for containing a fluid (4) in the liquid state, a second compartment (5) for containing a divided or porous substance (6), a communication conduit (7) between the first and the second compartment (3,5). An access way (12) to the first and to the second compartment (3,5), with hermetically sealing closure (13), allows to insert the fluid in the liquid state (4) and the divided or porous substance (6) in the first container (2). The second compartment (5) has a holed bottom (8) to serve as a filter. The communication conduit (7) has its inlet (9) in the first compartment (3) and its outlet (10) in the second compartment (5) and it allows the passage of the fluid (4) from the first to the second compartment (3, 5), when between the first and the second compartment (3, 5) a predetermined pressure differential is established as a result of the heating of the fluid (4) by effect of the microwaves, allowing, by gravity and pressure, the subsequent traversing of the divided or porous substance (6) by the fluid (4) with the consequent production of a drink. The drink can be collected through the holed bottom (8) of the second compartment (5) in an underlying second container (11) supporting the first container (2).

## Description

The present invention relates to a device for the rapid preparation of drinks in microwave oven by means of the intimate interaction between a heated fluid and a divided or porous substance.

Drinks can be coffee, espresso coffee, coffee with milk, cappuccino, tea, herb teas, infusions of various kinds or mixtures thereof. The fluid used is generally water, but it could also be another appropriate liquid or mixture of liquids. The divided or porous substances include powders or granules of various kinds, shredded or beaten vegetables, small leaves or small parts of vegetables. Such substances may be loose, or collected in bags permeable by liquids, or compacted in wafers or tablets.

Known devices for the preparation of drinks through the intimate interaction between a heated fluid and a divided or porous substance, for instance coffee makers or tea kettles, are constituted by metal parts and mainly operate through thermal conduction, thanks to the heat produced by electrical resistors or by gas combustion.

The devices described above present some drawbacks.

In particular, preparation times for the drinks are not negligible. Such devices cannot be used directly in microwave ovens, because they have metal parts. Moreover, being conceived to exploit, mainly by thermal conduction, an energy source located below and outside the device, their structure is totally unsuited to obtain satisfactory results in microwave ovens, in which the heating action is produced from within the fluid as an effect of the microwaves themselves.

The aim of the present invention is to overcome the drawbacks lamented above, making available a device for the rapid preparation of drinks in microwave oven by means of the intimate interaction between a heated fluid and a divided or porous substance, which allows to obtain drinks of good quality while adequately exploiting the energy produced by common microwave ovens and considerably reducing the time and energy required to obtain the drinks.

These aims and others besides, which shall become more readily apparent in the course of the description that follows, are reached, in accordance with the present invention, by a device for the rapid preparation of drinks in microwave oven by means of intimate interaction between a heated fluid and a divided or porous substance, as described in the enclosed claims.

The invention is described in greater detail below with the aid of the drawings, which show an embodiment provided purely by way of non limiting example.
- Figure 1 shows a schematic perspective view of the device of the present invention with a container for collecting the drink;
- Figure 2 shows a schematic perspective view of a first detail of the device of the present invention;
- Figure 3 shows a schematic perspective view of a second detail of the device of the present invention;
- Figure 4 shows a schematic perspective view of the container for collecting the drink;
- Figure 5 shows a vertical section of the device of the present invention with the container for collecting the drink;
- Figure 6 shows a detail of Figure 5, illustrating the principle of operation of the device.

With reference to the figures, the reference number 1 indicates a device for the rapid preparation of drinks in microwave oven by means of the intimate interaction between a heated drink and a divided or porous substance. The device 1 comprises a first container 2, made of a material compatible with microwaves and transparent thereto. The first container 2 comprises at least a first compartment 3 for containing a fluid 4 in the liquid state, at least a second compartment 5 for containing a divided or porous substance 6, at least a communication conduit 7 for communication between the first and the second compartment 3, 5. The second compartment 5 has a holed bottom 8 which is to serve as a filter. The first container 2 further comprises at least an access way 12 to said first and second compartments 3, 5, with hermetically sealing closure 13, to allow the insertion of the fluid 4 in the liquid state and of the divided or porous substance in the first container 2.

The communication conduit 7 has its inlet 9 in the first compartment 3 and outlet 10 in the second compartment 5. The communication conduit 7 allows the passage of the fluid 4 from the first to the second compartment 3,5 when between the first and the second compartment 3, 5 a predetermined pressure differential is established as a result of the heating of the fluid 4 by effect of the microwaves and of the action of the hermetically sealed closure 13, allowing by gravity and pressure the subsequent traversing of the divided or porous substance 6 by the fluid 4, with the subsequent production of a drink. Advantageously, a plurality of communication conduits 7 can be provided, such conduits being distributed in such a way as to determine a uniform action of the fluid 4 on the divided or porous substance 6. The drink can be collected through the holed bottom 8 of the second compartment 5 in at least an underlying second container 11 supporting the first container 2. Conveniently, also said second container 11 is made of material compatible to microwaves and transparent thereto. The second container 11 can even be a common ceramic or plastic cup, or a common glass or plastic tumbler for the direct consumption of the drink thus obtained. As stated, the holed bottom 8 of the second compartment 5 acts as a filter of the produced substance, preventing solid parts of the divided or porous substance 6 from collecting in the second container 11 together with the drink.

The passage of the fluid 4 in the communication conduit 7 can be obtained, for instance through a valve (not shown in the figures) located on the conduit and set to open when a certain level of pressure is reached in the first compartment 3, as a result of the heating of the fluid 4 and of its evaporation. In an embodiment of the invention, shown in the figures, the communication conduit 7 has its inlet 9 in the first compartment 3 at a predetermined distance from the bottom 14 of the first compartment 3 itself. In this way the inlet 9 is immersed in the fluid 4 present in the liquid state in the first compartment 3. The communication conduit 7 also has an outlet 10 in the second compartment 5 at a height at least greater than that of the inlet 9. In this way, as a result of the heating of the fluid 4 by effect of the microwaves, the difference in pressure between the first and the second compartment 3,5 is established. The communication conduit 7 thus constructed, therefore, co-operates with the fluid 4, present in the liquid state in the first compartment 3, to constitute a natural valve allowing the passage of the fluid 4 in the conduit 7 itself as the pressure in the first compartment 3 increases.

Advantageously, the first compartment 3 presents at least portions located at heights common with corresponding portions of the second compartment 5. In particular, in a first, preferred, embodiment of the invention, the first compartment 3 is obtained in a peripheral area of the first container 2 and surrounds the second compartment 5. In this way the fluid 4 in the liquid state surrounds the divided or porous substance 6. The divided or porous substance 6 is thus naturally shielded from the effect of the microwaves, until the fluid 4 wets it by effect of the passage from the first to the second compartment 3, 5. In this phase, given the rapidity of the effect of the microwaves on the heating of the fluid 4, the divided or porous substance 6 is still quite cool and, in contact therewith, the fluid 4 partially cools. This is particularly advantageous for the production of coffee or espresso coffee, in which there is a requirement not to burn the coffee powder and to avoid bringing the produced coffee to a boil.

If the drink to be produced is a particular herbal tea, to obtain which it is necessary for the water constituting the fluid 4 to boil for a certain time in contact with the divided or porous substance 6, in an alternative embodiment of the present invention, not shown in the figures for the sake of simplicity, the second compartment 5 is obtained in a peripheral area of the first container 2 and surrounds the first compartment 3.

Conveniently, the device 1 can comprise at least a safety valve 15 for controlling maximum pressure inside the first container 2.

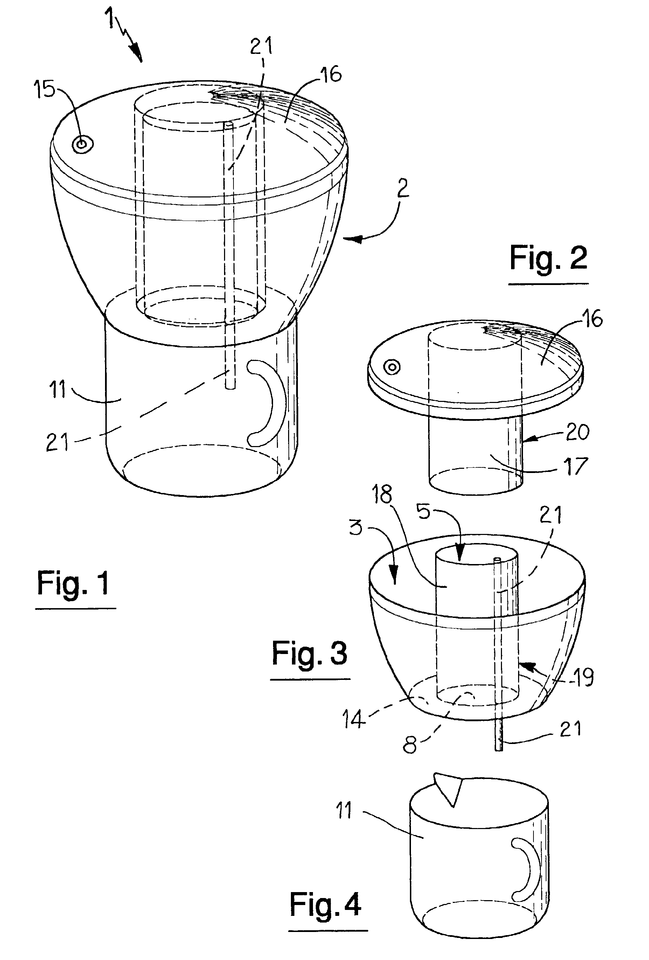

In the preferred embodiment of the invention shown in particular in Figures 1, 2, 3, 5, the hermetically sealing closure 13 of the access way 12 to the first and the second compartment 3,5 comprises a lid 16 of the first container 2. The lid 16 is provided with at least a protuberance 17 projecting towards the interior of the first container 2, whilst the first and the second compartment 3, 5 have dividing walls 18 projecting from the bottom of the first container 2 towards the lid 16, the protuberance 17 and the dividing walls 18 defining in combination the communication conduit 7 between the first and the second compartment 3, 5. This solution is particularly simple and advantageous. The inlet 9 and the outlet 10 of the communication conduit 7 between the first and the second compartment 3, 5 can be obtained by drilling appropriate holes in the protuberance 17 and in the dividing walls 18. Advantageously, moreover, as shown in Figures 1, 2, 3, 5, the second compartment 5 is in central position in the first container 2, is surrounded by the first compartment 3, is open superiorly and has first tubular walls 19 which extend to a predetermined distance from the lid 16 in closure position. The protuberance 17 also comprises second tubular walls 20 which extend coaxially to the first tubular walls 19 inside the first compartment 3 to a predetermined distance from the bottom 14 of the first compartment 3 when the lid 16 is in closed position. The first and the second tubular walls 19, 20 thus define the communication conduit 7 in the form of a hollow space, after the assembly of the lid 16 on the first container 2. Thus, a uniform fall of the fluid 4 on the edges of the divided or porous substance 6 is obtained in a very simple manner.

Alternatively, in an embodiment of the invention not shown in the figures for the sake of simplicity, the first compartment 3 is in central position in the first container 2, is surrounded by the second compartment 5, is open superiorly and has first tubular walls 19 which extend to a predetermined distance from the lid 16 in closure position. The protuberance 17 also comprises second tubular walls 20 which extend coaxially to the first tubular walls 19 inside the first compartment 3 to a predetermined distance from the bottom 14 of the first compartment 3 when the lid 16 is in closed position. The first and the second tubular walls 19, 20 thus define the communication conduit 7 in the form of a hollow space, after the assembly of the lid 16 on the first container 2.

The device 1 further comprises a relief conduit 21, connecting the interior of the first container 2 with the exterior of the first container 2 in the direction of the second container 11, to limit the pressure in the first container 2. Any excess pressure which may have been created is thus vented in the second container 11 supporting the first container 2. Since the coupling between the first and the second container 2, 11 is not hermetic, the excess pressure vents outwards. In particular, the relief conduit 21 can be obtained inside the second compartment 5, or in correspondence with the dividing walls 18 between the first and the second compartment 3, 5.

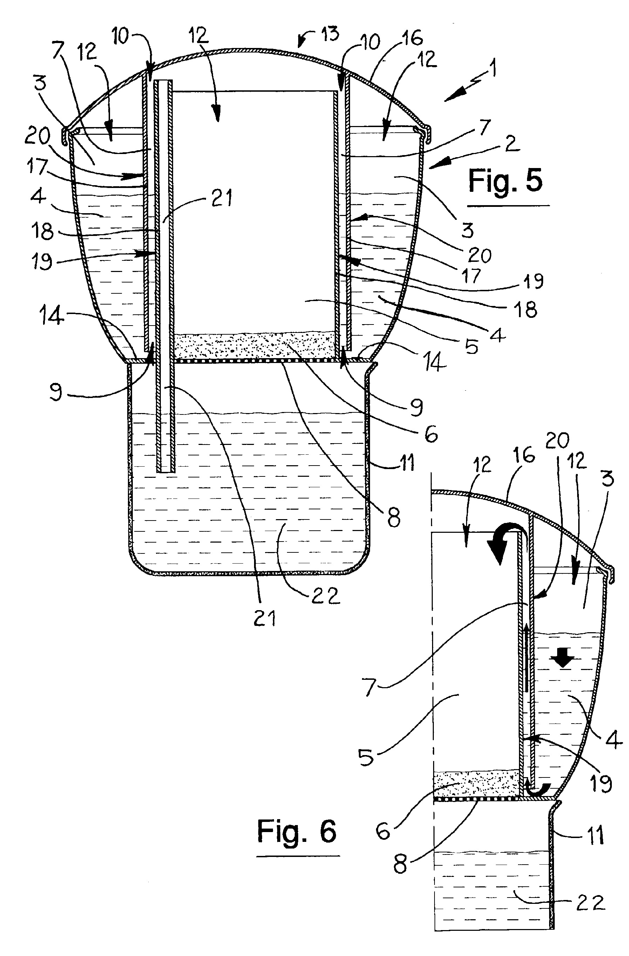

The second container 11 can contain a liquid 22 to be mixed with the drink. Such liquid can obviously be the drink itself or, for instance, milk to be mixed with coffee. Conveniently, as shown in particular in Figure 5, the relief conduit 21 extends towards the second container 11 for a predetermined length, thereby being submerged in the liquid 22 which may be present in the second container 11, to mix the liquid 22 itself by means of the air and the vapours of the fluid 4 exiting under pressure from the relief conduit 21 itself. If the liquid 22 is milk and the drink is coffee or espresso coffee, a drink of the cappuccino type can thus be easily obtained. The liquid 22 can also be the same produced drink. In this case, the mixing action operated by the air and by the vapours of the fluid 4 exiting under pressure from the relief conduit 21 can allow to dissolve, in the drink, sugar or sweetener previously inserted in the second container 11.

The operation of the invention is as follows. After inserting, through the access way 12, the fluid 4 and the divided and porous substance 6 in the respective compartments 3, 5 of the second container 2, the hermetically sealing lid 16 is closed. The first container 2 is positioned inside the microwave oven and bearing down on the second container 11 which may have been partially filled with the liquid 22. After setting the activation time and power, the oven is turned on. The fluid 4 heats very rapidly by effect of the microwaves. The pressure increases in the first compartment 3 relative to the second compartment 5 by effect of the conformation of the communication conduit 7 between the first and the second compartment 3, 5. As Figure 6 clearly shows, by effect of this pressure differential, at a certain point the fluid 4 flows up inside the communication conduit 7 and enters the second compartment 5, wetting the divided or porous substance 6. By gravity and pressure the fluid 4 traverses the divided or porous substance 6, partly dissolving it and producing the drink. The drink thus obtained, filtered by the holed bottom 8 of the second compartment 5, falls into the second container 11 and therein it may be mixed with the liquid 22, ready for final use. The second container 11, if empty at the start of the preparation of the drink, remains substantially cool until the drink is collected therein. This can prevent any undesired boiling of the produced drink. If, conversely, the container 11 is at least partially filled with liquid 22 (for instance milk) to be mixed with the drink (for instance coffee), the energy of the microwaves causes the production of the drink and simultaneously the heating of the liquid 22. The relief conduit 21, at the same time, may provide to mix the drink and the liquid 22 (producing, in the example, a cappuccino type of drink).

The invention achieves important advantages. It is an extremely simple system, which can be manufactured from plastic material with economical techniques. It allows to obtain drinks such as coffee, espresso coffee, milk and coffee, cappuccino, tea, herbal teas of high quality, exploiting the energy produced by microwave ovens and the rapidity of action of microwave ovens on liquid substances, with the advantage of considerably reducing the time and energy required to obtain the drinks. The drinks produced can be collected directly during their production in the container used for final consumption.

The invention thus conceived can be subject to numerous modifications and variations, without thereby departing from the scope of the inventive concept that characterises it. Moreover, all components can be replaced by technically equivalent elements. In practice all materials employed, as well as the dimensions, can be any, depending on requirements.

## Claims

1. A device (1) for the rapid preparation of drinks in microwave oven by means of the intimate interaction between a heated fluid and a divided or porous substance, characterised in that it comprises:
- a first container (2), made of a material compatible with microwaves and transparent thereto, comprising at least a first compartment (3) for containing a fluid (4) in the liquid state, at least a second compartment (5) for containing a divided or porous substance (6), at least a communication conduit (7) for communication between the first and the second compartment (3,5), the second compartment (5) having a holed bottom (8) to serve as a filter, the communication conduit (7) having its inlet (9) in the first compartment (3) and its outlet (10) in the second compartment (5) and allowing the passage of the fluid (4) from the first to the second compartment (3,5), when between the first and the second compartment (3,5) a predetermined pressure differential is established as a result of the heating of the fluid (4) by effect of the microwaves, allowing, by gravity and pressure, the subsequent traversing of the divided or porous substance (6) by the fluid (4) with the consequent production of a drink, such drink being able to be collected through the holed bottom (8) of the second compartment (5) in at least an underlying second container (11) supporting the first container (2);
- at least an access way (12) to said first and second compartment (3,5), with hermetically sealing closure (13), to allow the insertion of the fluid (4) in the liquid state and of the divided or porous substance (6) into the first container (2).

2. A device (1) as claimed in claim 1, characterised in that the communication conduit (7) has its inlet (9) in the first compartment (3) at a predetermined distance from the bottom (14) of the first compartment (3) itself and outlet (10) in the second compartment (5) at a height at least greater than that of the inlet (9), to determine, as a result of the heating of the fluid (4) by effect of the microwaves, the establishing of the pressure differential between the first and the second compartment (3,5).

3. A device as claimed in claim 1 or 2, characterised in that the first compartment (3) presents at least portions situated at common heights with corresponding portions of the second compartment (5).

4. A device as claimed in claim 3, characterised in that the first compartment (3) is obtained in a peripheral area of the first container (2) and surrounds the second compartment (5).

5. A device as claimed in claim 3, characterised in that the second compartment (5) is obtained in a peripheral area of the first container (2) and surrounds the first compartment (3).

6. A device as claimed in claim 1, characterised in that it comprises at least a safety valve (15) for controlling the maximum pressure inside the first container (2).

7. A device as claimed in claim 2, characterised in that the hermetically sealed closure (13) of the access way (12) to the first and to the second compartment (3,5) comprises a lid (16) of the first container (2), the lid (16) being provided with at least a protuberance (17) projecting towards the interior of the first container (2), the first and the second compartment (3,5) having dividing walls (18) projecting from the bottom of the first container (2) towards the lid (16), the projection (17) and the dividing walls (18) defining in combination the communication conduit (7) between the first and the second compartment (3,5).

8. A device as claimed in claim 7, characterised in that the second compartment (5) is in central position in the first container (2), is surrounded by the first compartment (3), is superiorly open, has first tubular walls (19) which extend to a predetermined distance from the lid (16) in closed position, the protuberance (17) itself comprising second tubular walls (20) which extend coaxially to the first tubular walls (19) inside the first compartment (3) to a predetermined distance from the bottom (14) of the first compartment (3) when the lid (16) is in the closed position, the first and the second tubular walls (19, 20) defining the communication conduit (7) in the form of a hollow space after the assembly of the lid (16) on the first container (2).

9. A device as claimed in claim 7, characterised in that the first compartment (3) is in central position in the first container (2), is surrounded by the second compartment (5), is superiorly open, has first tubular walls (19) which extend to a predetermined distance from the lid (16) in closed position, the protuberance (17) itself comprising second tubular walls (20) which extend coaxially to the first tubular walls (19) inside the first compartment (3) to a predetermined distance from the bottom (14) of the first compartment (3) when the lid (16) is in the closed position, the first and the second tubular walls (19, 20) defining the communication conduit (7) in the form of a hollow space after the assembly of the lid (16) on the first container (2).

10. A device as claimed in claim 8 or 9, characterised in that it comprises a relief conduit (21) connecting the interior of the first container (2) with the exterior of the first container (2) in the direction of the second container (11), to limit the pressure in the first container (2).

11. A device as claimed in claim 10, characterised in that the relief conduit (21) extends towards the second container (11) for a predetermined length, to mix a liquid (22) present in the second container (11) by means of the air and the vapours of the fluid (4) exiting under pressure from the relief conduit (21) itself.

12. A device as claimed in claim 1 or 11, characterised in that the second container (11) contains a liquid (22) to be mixed with the drink.
